# EUROPEAN PATENT APPLICATION

(11) **EP 4 296 222 A1**
(43) Date of publication of application: **27.12.2023**
(21) Application number: 21926560.0
(22) Date of filing: 18.02.2021
(51) Int. Cl.: C01B 3/50

(54) **HYDROGEN USAGE MANAGEMENT APPARATUS, HYDROGEN SUPPLY/DEMAND MANAGEMENT APPARATUS, OPERATION SYSTEM OF HYDROGEN SUPPLY/DEMAND MANAGEMENT AND HYDROGEN SUPPLY/DEMAND MANAGEMENT METHOD**

(71) Applicant: Hitachi, Ltd., Tokyo 100-8280 (JP)
(72) Inventor: INAGAKI Ryohei, Tokyo 100-8280 (JP); SASAKI Takashi, Tokyo 100-8280 (JP); MAKINO Shigeki, Tokyo 100-8280 (JP); FUKUMOTO Takashi, Tokyo 100-8280 (JP); IIZUKA Hidehiro, Tokyo 100-8280 (JP); KANI Yuuko, Tokyo 100-8280 (JP); SUZUKI Tomoko, Tokyo 100-8280 (JP); MORITA Ayumu, Tokyo 100-8280 (JP)
(74) Representative: Mewburn Ellis LLP
(86) International application number: PCT/JP2021/006178
(87) International publication number: WO 2022/176125

(57) **Abstract**

A hydrogen use management device (302) includes a hydrogen extraction unit (311) that extracts hydrogen from a blend gas supplied from a gas pipeline (1); an extracted hydrogen supply unit (312) that supplies the hydrogen extracted by the hydrogen extraction unit (311) to a hydrogen usage device (1000); an extracted hydrogen amount measurement unit (313) that measures a hydrogen usage amount extracted by the hydrogen extraction unit (311) and supplied to the hydrogen usage device (1000); an extracted hydrogen amount communication unit (314) that transmits, to the outside, information on the hydrogen usage amount measured by the extracted hydrogen amount measurement unit (313); and a gas return unit (315) that returns the gas, after the hydrogen extraction unit (311) has separated the hydrogen, to the gas pipeline (1).

## Description

### Technical Field

The present invention relates to a hydrogen use management device, a hydrogen supply and demand management device, a hydrogen supply and demand management operations system, and a hydrogen supply and demand management method.

### Background Art

Whereas fossil fuels emit carbon dioxide during combustion, hydrogen is clean energy that does not emit carbon dioxide during combustion. Therefore, hydrogen is attracting attention as an example of clean energy to combat global warming. Hydrogen is produced by electrolysis of water using renewable energy or the like, reforming of natural gas, and so forth. In recent years, advances have been made in technological development relating to the production, transportation, and usage of hydrogen.

PTL 1 indicates that a high pressure container is filled with hydrogen gas, and the high pressure container is transported to a hydrogen user using a transport vehicle or the like.

### Citation List

### Patent Literature

PTL 1: JP 2018-162851 A

### Summary of Invention

### Technical Problem

PTL 1 discloses a method for transporting hydrogen, but there are concerns about the cost required for energy such as high-pressure and low-temperature processing at the time of hydrogen filling, and costs for maintaining a predetermined pressure and temperature for ensuring vaporization loss and safety at the time of transportation.

In addition, there is also a hydrogen transportation method using a hydrogen storage alloy, but because the weight of the hydrogen storage alloy is heavy (the packing density is low) relative to the amount of hydrogen that can be stored, increased costs for hydrogen transportation are a concern. Further, when hydrogen storage and release are repeated according to the type of hydrogen storage alloy, material embrittlement occurs. As a result, maintenance costs due to replacement or the like in cases where the hydrogen storage amount is reduced will be incurred. Furthermore, rare metals such as rare earth elements are sometimes used for the hydrogen storage alloy, and there are concerns about resource shortages and increased costs.

Further, in the case of the invention disclosed in Patent Literature 1, in a case where a hydrogen user needs hydrogen, it is necessary to transport hydrogen using a transport vehicle.

In the Ministry of the Environment, a "renewable energy electrolytic-hydrogen production and hydrogen mixed-gas supply and usage demonstration project" was started in 2019 (URL: https://www.env.go.jp/press/106873-print.html). In this project, hydrogen is produced through the electrolysis of water using the power of wind power generation, and the hydrogen and simulated gas equivalent to city gas are blended and supplied to a usage site through a gas pipe. The blend gas is used as is in a water heater, a gas stove, or the like. Using this method, a blend of hydrogen and city gas can be constantly supplied to a hydrogen user through a gas pipeline. However, because city gas is also supplied and used together with hydrogen, carbon dioxide is inevitably discharged in the hydrogen usage device.

Therefore, an object of the present invention is to make it possible to use a necessary amount of hydrogen when necessary at low cost and safely without contacting a hydrogen supplier.

### Solution to Problem

In order to solve the above problems, a hydrogen use management device of the present invention includes a hydrogen extraction unit that extracts hydrogen from a blend gas supplied from a gas pipeline; an extracted hydrogen supply unit that supplies the hydrogen extracted by the hydrogen extraction unit to a hydrogen usage device; an extracted hydrogen amount measurement unit that measures a hydrogen usage amount extracted by the hydrogen extraction unit and supplied to the hydrogen usage device; an extracted hydrogen amount communication unit that transmits, to the outside, information on the hydrogen usage amount measured by the extracted hydrogen amount measurement unit; and a gas return unit that returns the gas, after the hydrogen extraction unit has separated the hydrogen, to the gas pipeline.

A hydrogen supply and demand management device of the present invention includes a hydrogen usage amount aggregation unit that aggregates hydrogen usage amounts received from a hydrogen use management device that uses hydrogen in a gas pipeline; a hydrogen supply amount aggregation unit that aggregates hydrogen supply amounts received from a hydrogen supply management device that supplies hydrogen into the gas pipeline; and a real-time hydrogen amount analysis unit that simulates the amount of hydrogen in the gas pipeline from the hydrogen usage amounts aggregated by the hydrogen usage amount aggregation unit, and the hydrogen supply amounts aggregated by the hydrogen supply amount aggregation unit.

A hydrogen supply and demand management operations system of the present invention includes a hydrogen supply and demand management device that manages information on an amount of hydrogen extracted and used in a gas pipeline and an amount of hydrogen supplied to the gas pipeline; a hydrogen use management device that extracts hydrogen from a blend gas in the gas pipeline, causes an external device to use the extracted hydrogen, and transmits information on a hydrogen usage amount used by the external device to the hydrogen supply and demand management device; and a hydrogen supply management device that supplies hydrogen to the gas pipeline and transmits information on the amount of hydrogen supplied to the gas pipeline to the hydrogen supply and demand management device.

A hydrogen supply and demand management method of the present invention includes a step in which a hydrogen usage amount aggregation unit aggregates hydrogen usage amounts received from a hydrogen use management device that uses hydrogen in a gas pipeline; a step in which a hydrogen supply amount aggregation unit aggregates hydrogen supply amounts received from a hydrogen supply management device that supplies hydrogen into the gas pipeline; and a step in which a hydrogen amount prediction unit simulates the hydrogen amount in the gas pipeline from the hydrogen usage amounts aggregated by the hydrogen usage amount aggregation unit and the hydrogen supply amounts aggregated by the hydrogen supply amount aggregation unit.

Other means will be described in the Description of Embodiments.

### Advantageous Effects of Invention

According to the present invention, it is possible to use a necessary amount of hydrogen when necessary at low cost and safely without contacting a hydrogen supplier.

### Brief Description of Drawings

[FIG. 1] FIG. 1 is a conceptual diagram of a hydrogen supply and demand management device according to the present embodiment.
[FIG. 2] FIG. 2 is a diagram showing a hydrogen supply and demand management device in a case where a blend gas of natural gas and hydrogen is mixed in a pipeline.
[FIG. 3] FIG. 3 is a block diagram of a hydrogen use management device.
[FIG. 4] FIG. 4 is an explanatory diagram of a hydrogen supply and demand management device.
[FIG. 5] FIG. 5 is a block diagram of a hydrogen supply and demand management device equipped with a function for predicting the future.
[FIG. 6] FIG. 6 is a flowchart executed by the hydrogen supply and demand management device.
[FIG. 7A] FIG. 7A is a schematic diagram showing points on a gas pipeline.
[FIG. 7B] FIG. 7B is a graph showing the hydrogen concentration at each point.
[FIG. 8] FIG. 8 is a block diagram of a hydrogen use management device.

### Description of Embodiments

Hereinafter, modes for carrying out the present invention will be described in detail with reference to the drawings. Note that the same configurations are denoted by the same reference signs, and in a case where there is an overlap between descriptions thereof, a description may be omitted. Further, the present invention is not limited to or by the embodiments below.

An object according to the present embodiment is to solve the problem of hydrogen supply and demand while satisfying economic efficiency, safety, convenience, and global warming countermeasures with respect to hydrogen that is produced as clean energy.

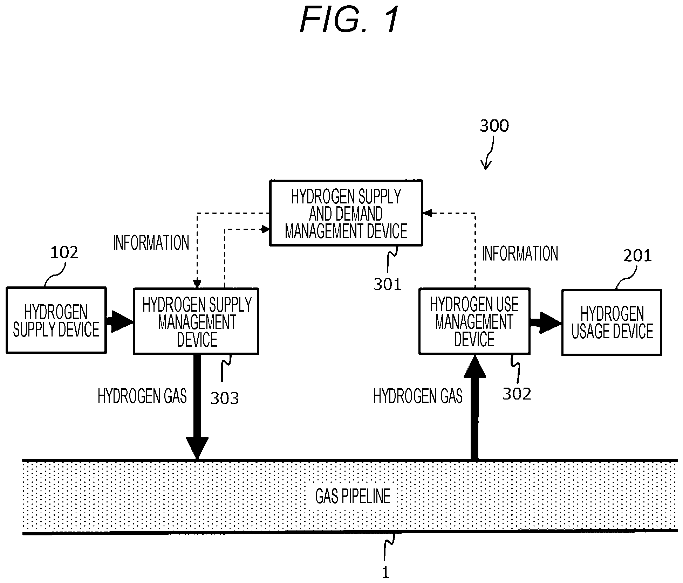

FIG. 1 is a conceptual diagram of a hydrogen supply and demand management operations system 300 according to the present embodiment.

The hydrogen supply and demand management operations system 300 according to the present embodiment is configured including a hydrogen use management device 302, a hydrogen supply management device 303, a hydrogen supply and demand management device 301, a hydrogen usage device 201 using the same, and a hydrogen supply device 102, which are shown in FIG. 1. The hydrogen use management device 302 of the hydrogen supply and demand management operations system 300 manages and operates the amount of hydrogen supplied to a gas pipeline 1 and the amount of hydrogen to be used by separating and extracting hydrogen in the gas pipeline 1.

This gas pipeline 1 is, for example, a pipeline for supplying a blend gas obtained by blending hydrogen and natural gas. Note that the blend gas is not limited to natural gas, and any known gas may be employed as long as same is able to contain hydrogen and can be circulated.

The hydrogen supply device 102 is connected to the gas pipeline 1 via the hydrogen supply management device 303. The hydrogen supply device 102 is a device that produces hydrogen and supplies the hydrogen to the outside. The hydrogen supply management device 303 is a device that supplies hydrogen produced by the hydrogen supply device 102 to the gas pipeline 1, measures the amount of supplied hydrogen, and transmits the measured amount to the hydrogen supply and demand management device 301.

The hydrogen usage device 201 is connected to the gas pipeline 1 via the hydrogen use management device 302. The hydrogen usage device 201 is a device that uses hydrogen. The hydrogen use management device 302 is a device that extracts hydrogen from the blend gas of the gas pipeline 1 and allows the hydrogen usage device 201 to use the extracted hydrogen, measures the amount of hydrogen used by the hydrogen usage device 201, and transmits the measured amount to the hydrogen supply and demand management device 301.

The hydrogen usage device 201 is capable of extracting the hydrogen used in equipment using hydrogen, such as a fuel cell, from the gas pipeline 1 via the hydrogen use management device 302. Here, the amount of hydrogen extracted from the gas pipeline 1 by the hydrogen use management device 302 is regulated by the hydrogen usage device 201. The hydrogen use management device 302 may regulate the amount of hydrogen extracted from the gas pipeline 1 in conjunction with capacity control, level control, and the like, on the hydrogen usage device 201 side.

In addition, the hydrogen use management device 302 measures and records the amount of hydrogen used by the hydrogen usage device 201 (hydrogen usage amount), and transmits the information to the hydrogen supply and demand management device 301. The transmission method is performed wirelessly like a smart meter, but transmission may also be by wire. That is, the hydrogen use management device 302 extracts hydrogen from the blend gas of the gas pipeline 1 and causes the hydrogen usage device 201, which is an external device, to use the extracted hydrogen, and transmits information on the hydrogen usage amount used by the hydrogen usage device 201 to the hydrogen supply and demand management device 301.

In addition, an interval in which the hydrogen use management device 302 transmits information on the hydrogen usage amount to the hydrogen supply and demand management device 301 is set to a predetermined interval (for example, about one minute to five minutes), in order to manage the supply and demand of hydrogen, for example. In a case where an information transmission interval is set, the interval in which the hydrogen use management device 302 measures the hydrogen usage amount is preferably equal to or less than the information transmission interval.

Next, the hydrogen supply management device 303 produces hydrogen using the hydrogen supply device 102 based on the hydrogen supply amount received from the hydrogen supply and demand management device 301, and supplies the produced hydrogen to the gas pipeline 1. The method for producing hydrogen may be any method such as, but not limited to, for example, a method for producing hydrogen by electrolysis of water using electric power generated by renewable energy, a method for producing hydrogen by causing carbon monoxide, which is generated when coal is gasified, to undergo a shift reaction and then separating carbon dioxide therefrom, or a method for producing hydrogen by steam reforming natural gas. Note that, in order to realize carbon-free production, in a case where carbon dioxide is generated in the production process, the hydrogen supply device 102 preferably recovers the carbon dioxide, converting same into, or storing same as, a valuable material.

The hydrogen supply management device 303 measures and records the supply amount of hydrogen supplied to the gas pipeline 1, and transmits information on the supply amount of hydrogen to the hydrogen supply and demand management device 301. Similarly to the hydrogen use management device 302, the interval in which the information on the hydrogen supply amount is transmitted to the hydrogen supply and demand management device 301 may be set to a predetermined interval (for example, about one minute to five minutes) in order to manage the supply and demand of hydrogen, for example, and the interval is preferably matched to the information transmission interval of the hydrogen use management device 302. In a case where an information transmission interval is set, the interval in which the hydrogen supply management device 303 measures the hydrogen usage amount is preferably equal to or less than the information transmission interval.

The hydrogen supply and demand management device 301 manages the information on the hydrogen usage amount received from the hydrogen use management device 302 and the information on the hydrogen supply amount received from the hydrogen supply management device 303. That is, the hydrogen supply and demand management device 301 manages information on the amount of hydrogen extracted and used in the gas pipeline 1 and the amount of hydrogen supplied to the gas pipeline 1. The hydrogen supply and demand management device 301 may use these accumulated data to predict the hydrogen supply amount or to calculate the usage fees of the hydrogen usage device 201.

With the hydrogen supply and demand management operations system 300 according to the present embodiment, it is possible to manage and operate the supply and demand of hydrogen by the hydrogen usage device 201 and the hydrogen supply device 102, which are connected by the gas pipeline 1.

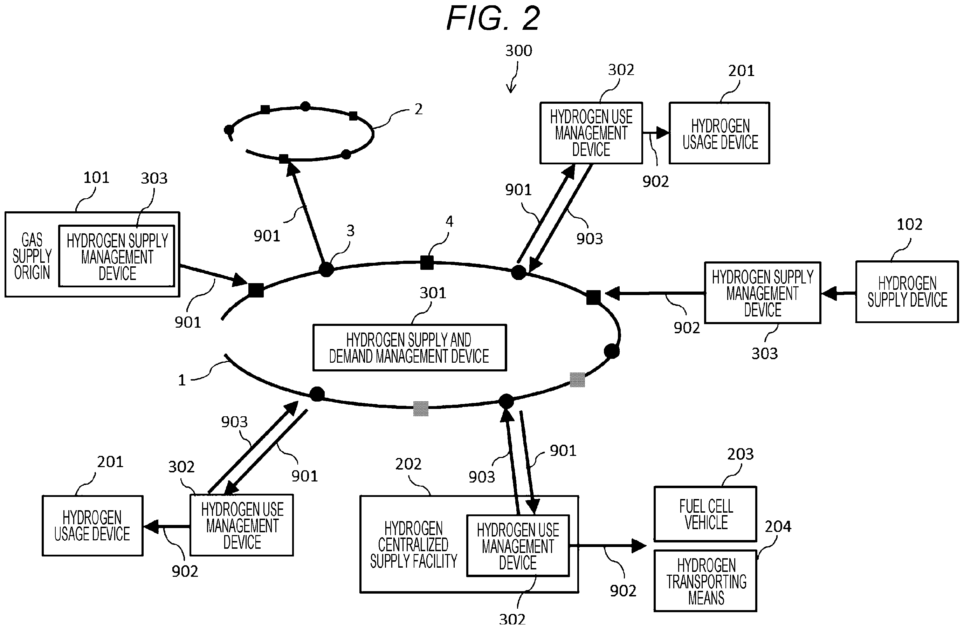

FIG. 2 is a diagram showing the hydrogen supply and demand management operations system 300 in a case where a blend gas obtained by blending natural gas and hydrogen is mixed in a pipeline, and is a detailed description of FIG. 1.

The hydrogen supply and demand management operations system 300 shown in FIG. 2 is configured including a gas pipeline 1, a gas supply origin 101, a hydrogen supply device 102 and a hydrogen supply management device 303, a hydrogen use management device 302 and a hydrogen usage device 201, a hydrogen use management device 302 and a hydrogen centralized supply facility 202 including same, and a hydrogen supply and demand management device 301, and is also connected to another regional gas pipeline 2. The hydrogen centralized supply facility 202 is a facility that supplies hydrogen to hydrogen usage facilities such as a fuel cell vehicle 203 or a hydrogen transporting means 204.

The hydrogen usage device 201 is connected to the gas pipeline 1 via the hydrogen use management device 302. The hydrogen use management device 302 is capable of drawing in a blend gas 901 from the gas pipeline 1, and of separating and extracting hydrogen 902 to the extent of the hydrogen flow rate used in a hydrogen usage facility such as the hydrogen usage device 201, the fuel cell vehicle 203, or the hydrogen transporting means 204.

Here, the hydrogen flow rate used by the hydrogen usage facility may be regulated by the hydrogen usage device 201, or may be automatically regulated in conjunction with capacity control, level control, and the like, on the hydrogen usage facility side. Furthermore, where hydrogen usage is concerned, for example, the hydrogen centralized supply facility 202 may extract the hydrogen 902 from the gas pipeline 1 and supply the hydrogen to the fuel cell vehicle 203, or supply the hydrogen to a hydrogen usage device (not illustrated), such as a truck, that is not connected to the gas pipeline 1 via the hydrogen transporting means 204.

The return gas 903, obtained by using the hydrogen use management device 302 to separate the hydrogen 902 from the blend gas 901, is regulated to a temperature and a pressure enabling the gas to be returned to the gas pipeline 1, and then returned to the gas pipeline 1. In addition, the hydrogen use management device 302 measures and records the hydrogen usage amount of the hydrogen usage device 201 connected to the hydrogen use management device, and transmits information on the hydrogen usage amount to the hydrogen supply and demand management device 301.

The hydrogen supply device 102 produces hydrogen in the hydrogen supply amount received by the hydrogen supply management device 303 from the hydrogen supply and demand management device 301, and supplies the produced hydrogen to the gas pipeline 1. Here, the gas supply origin 101 contains a hydrogen supply management device 303, produces hydrogen based on the hydrogen supply amount received from the hydrogen supply and demand management device 301, and supplies the produced hydrogen to the gas pipeline 1.

The hydrogen supply device 102 may supply hydrogen by using any method such as, but not limited to, for example, a method for producing hydrogen by electrolysis of water using electric power generated by renewable energy, a method for producing hydrogen by causing carbon monoxide, which is generated when coal is gasified, to undergo a shift reaction and then separating carbon dioxide therefrom, or a method for producing hydrogen by steam reforming natural gas. Note that, in order to realize carbon-free production, in a case where carbon dioxide is generated in the production process, the hydrogen supply device 102 preferably recovers the carbon dioxide, converting same into, or storing same as, a valuable material.

Further, the hydrogen supply management device 303 measures and records the amount of supplied hydrogen supplied to the gas pipeline 1, and transmits the information to the hydrogen supply and demand management device 301. Similarly to the hydrogen use management device 302, the interval in which the hydrogen supply management device 303 transmits information on the hydrogen supply amount to the hydrogen supply and demand management device 301 may be set to a predetermined interval (for example, about one minute to five minutes) in order to manage the supply and demand of hydrogen, for example, and the interval is preferably matched to that of the hydrogen use management device 302. When the data interval is set, the interval in which the hydrogen supply management device 303 measures the hydrogen supply amount is preferably equal to or less than the interval in which the hydrogen supply management device 303 transmits the hydrogen supply amount.

Finally, the hydrogen supply and demand management device 301 manages the data of the hydrogen usage amount received from the hydrogen use management device 302 and the hydrogen supply amount received from the hydrogen supply management device 303. The hydrogen supply and demand management device 301 may use the accumulated data of the hydrogen supply amount to predict the future hydrogen supply amount, or may use the accumulated data of the hydrogen supply amount to calculate the usage fees for the hydrogen used by the hydrogen usage device 201.

With the hydrogen supply and demand management operations system 300 according to the present embodiment, it is possible to manage and operate the supply and demand of the hydrogen usage device 201 and the hydrogen supply management device 303, which are connected by the gas pipeline 1.

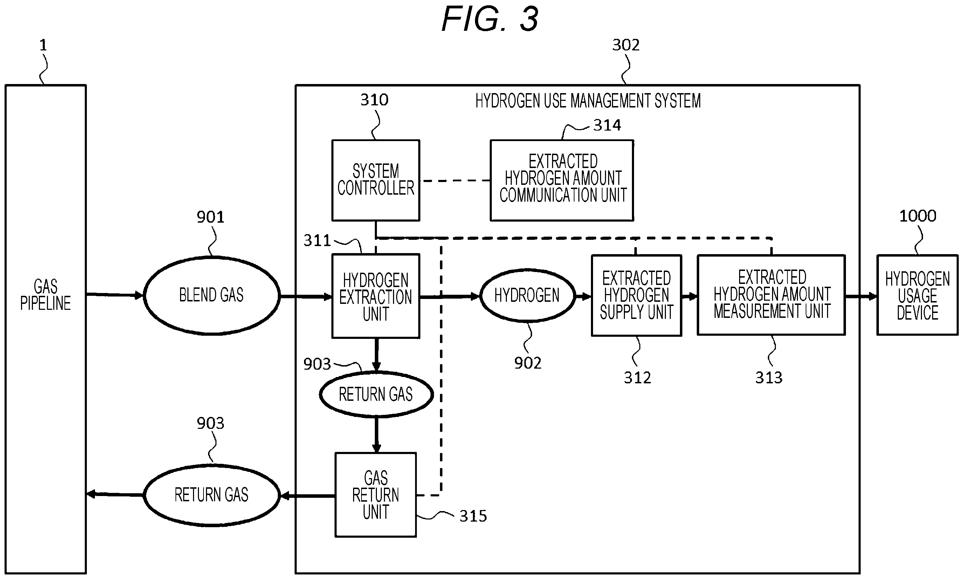

FIG. 3 is a block diagram of the hydrogen use management device 302.

The hydrogen use management device 302 includes a system controller 310, a hydrogen extraction unit 311, an extracted hydrogen supply unit 312, an extracted hydrogen amount measurement unit 313, an extracted hydrogen amount communication unit 314, and a gas return unit 315, and is connected to the gas pipeline 1 through a flow path of the blend gas 901 and a flow path of the return gas 903.

In the present embodiment, the blend gas 901 is composed of hydrogen and natural gas.

The system controller 310 executes information aggregation and control management for the entire hydrogen use management device 302. Under the control of the system controller 310, the hydrogen 902 is supplied to the hydrogen usage device 1000 owned by the hydrogen usage device 201 by using the following procedure.

(Procedure 1) The blend gas 901 flows into the hydrogen use management device 302 from one flow path connected to the gas pipeline 1.

(Procedure 2) A hydrogen extraction unit 311 in the hydrogen use management device 302 separates hydrogen 902 and return gas 903. The hydrogen 902 is supplied to the extracted hydrogen supply unit 312. However, the return gas 903 is supplied to the gas return unit 315.

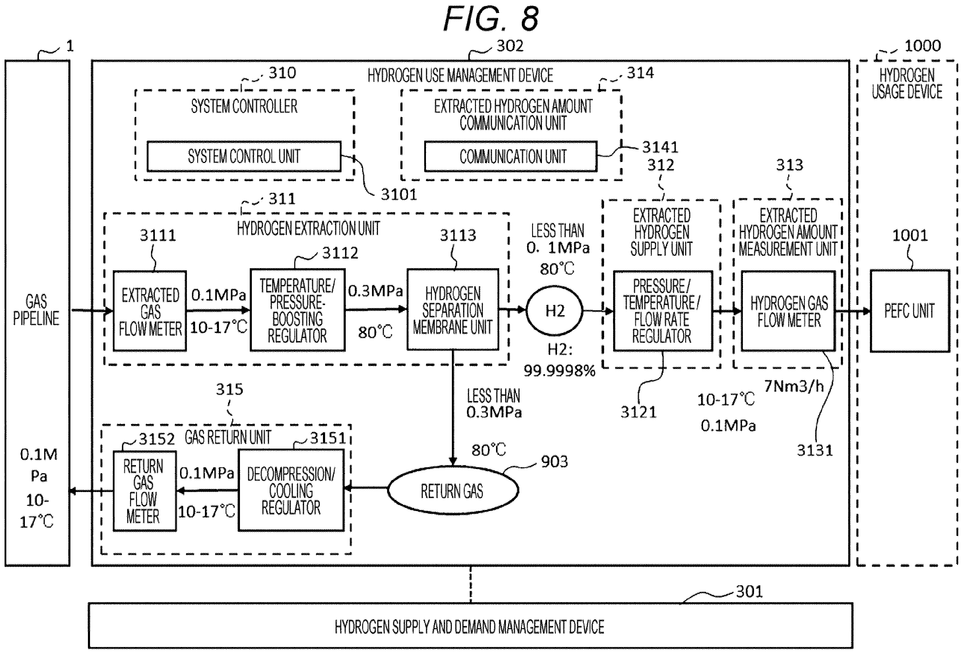

The hydrogen extraction unit 311 separates the hydrogen 902 and the return gas 903 from the blend gas 901 supplied from the gas pipeline 1, to extract the hydrogen 902. For this purpose, the hydrogen extraction unit 311 includes a separation mechanism such as a hydrogen separation membrane method, a pressure swing adsorption separation method (pressure swing adsorption) (PSA)), or a temperature fluctuation adsorption separation method (thermal swing adsorption (TSA)). The hydrogen extraction unit 311 preferably includes a mechanism that performs pressurization, depressurization, heating, cooling, or the like, for compliance with conditions (temperature, pressure, and so forth) suitable for the separation method. Details of the hydrogen extraction unit 311 will be described below using FIG. 8.

(Procedure 3) The extracted hydrogen supply unit 312 regulates the hydrogen 902 extracted by the hydrogen extraction unit 311 to meet the condition of being suitable for the hydrogen usage device 1000, and supplies the extracted hydrogen 902 to the extracted hydrogen amount measurement unit 313. Accordingly, the extracted hydrogen supply unit 312 supplies hydrogen 902 extracted by the hydrogen extraction unit 311 to the hydrogen usage device 1000. The conditions suitable for the hydrogen usage device 1000 are any one or more of temperature, pressure, and flow rate. The extracted hydrogen supply unit 312 is a regulator that regulates any one or more of the pressure, temperature, and flow rate of hydrogen gas.

Note that, in a case where it is a condition that the hydrogen 902 extracted by the hydrogen extraction unit 311 is suitable for the hydrogen usage device 1000, it is also possible to exclude the extracted hydrogen supply unit 312 from the hydrogen use management device 302.

(Procedure 4) The extracted hydrogen amount measurement unit 313 measures the amount of hydrogen 902 used by the hydrogen usage device 1000. The extracted hydrogen amount measurement unit 313 measures the hydrogen usage amount extracted by the hydrogen extraction unit 311 and supplied to the hydrogen usage device 1000.

Information on the hydrogen usage amounts used by the hydrogen usage device 1000 is aggregated in the system controller 310, and is transmitted to the hydrogen supply and demand management device 301 via the extracted hydrogen amount communication unit 314, based on the information from the system controller 310. The extracted hydrogen amount communication unit 314 transmits, to the outside, information on the hydrogen usage amount as measured by the extracted hydrogen amount measurement unit 313.

(Procedure 5) The return gas 903 separated by the hydrogen extraction unit 311 is regulated in the gas return unit 315 to satisfy a condition (temperature, pressure, flow rate, and so forth) under which the return gas may be returned to the gas pipeline 1. The gas return unit 315 then returns the return gas 903, which is the gas after the hydrogen extraction unit 311 has separated the hydrogen, to the gas pipeline 1 using the other flow path connected to the gas pipeline 1.

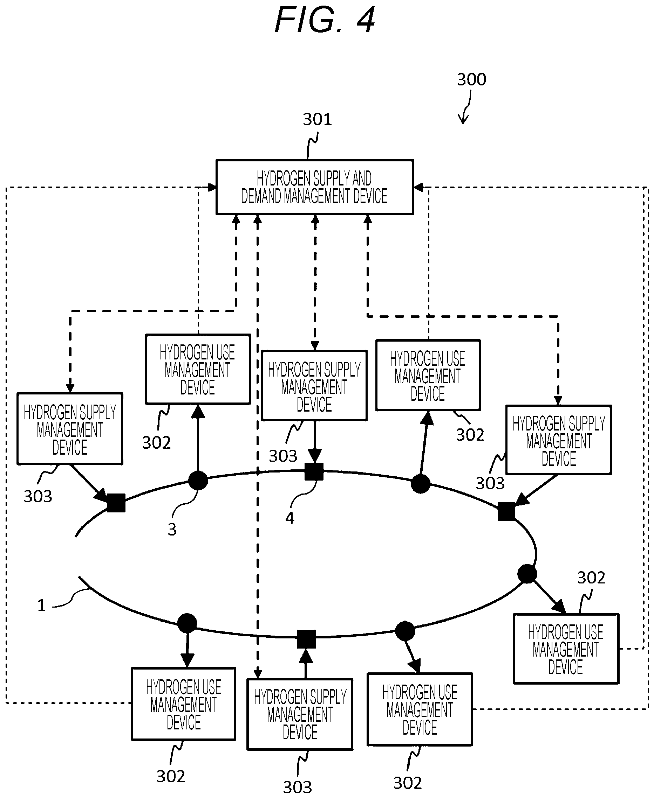

FIG. 4 is an explanatory diagram of the hydrogen supply and demand management device 301.

In the gas pipeline 1, in which natural gas is blended with hydrogen, a plurality of hydrogen supply management devices 303 for managing the amount of hydrogen to be supplied to the gas pipeline 1 are connected at a gas pipeline junction 4. The hydrogen supply management device 303 transmits information on the amount of hydrogen to be supplied to the gas pipeline 1 to the hydrogen supply and demand management device 301.

Further, in the gas pipeline 1, a plurality of hydrogen use management devices 302 that separate and extract hydrogen from the mixed gas from the gas pipeline 1 and manage the amounts of extracted and used hydrogen are connected at a gas pipeline branch point 3. The hydrogen use management device 302 transmits the hydrogen supply and demand amount at each point to the hydrogen supply and demand management device 301.

The hydrogen supply and demand management device 301 according to the present embodiment simulates, in real time, the hydrogen concentration or the hydrogen amount in the gas pipeline 1 at arbitrary points, from the supply and demand amounts of hydrogen as sent from the hydrogen supply management device 303 and the hydrogen use management device 302 on a cyber physical system (CPS) equipped with a cyber grid simulating a gas pipeline network (physical grid) on a virtual space.

When the hydrogen usage device 201 extracts only hydrogen from the gas pipeline 1 and returns natural gas, the hydrogen concentration in the gas pipeline 1 downstream thereof decreases. There is then an increase in the hydrogen separation efficiency and the amount of mixed gas to be received in order to extract the required amount of hydrogen, and the throughput decreases, and thus not being able to secure the required amount of hydrogen is a concern.

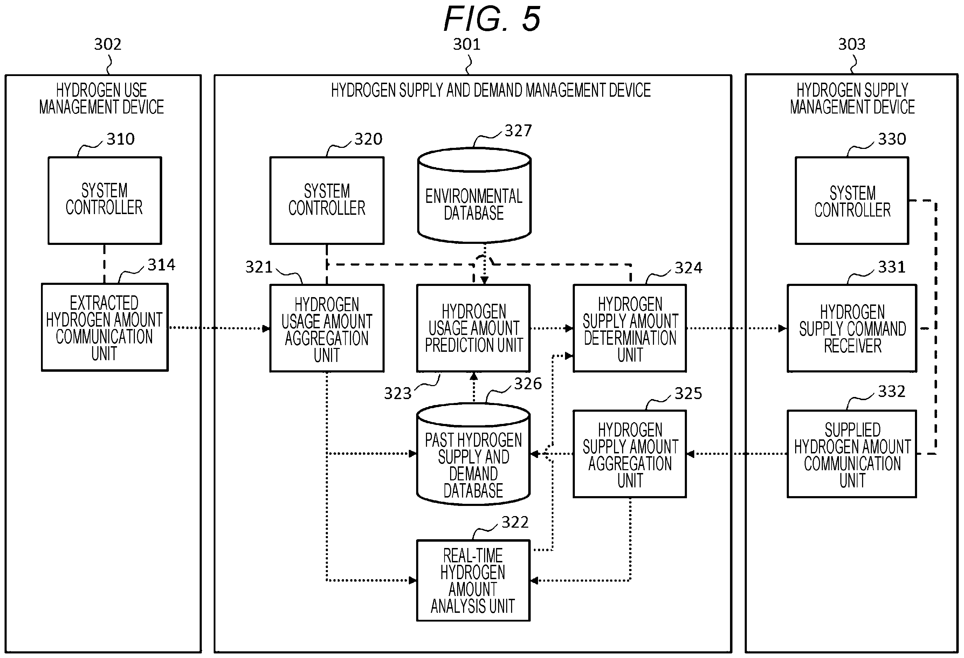

In the present embodiment, the hydrogen supply and demand management device 301 simulates and grasps the hydrogen concentration or the hydrogen amount at arbitrary points of the gas pipeline 1 in real time. As a result, the gas pipeline 1 can be appropriately operated, for example, by sending, as necessary, an instruction for an additional supply of hydrogen from the hydrogen supply and demand management device 301 to the hydrogen supply management device 303. Details of the present operation method will be described in more detail using FIG. 5.

In the present embodiment, an example has been described in which a CPS for constructing the cyber grid is used as means for ascertaining the state of the gas pipeline 1, but any means may be used, such as collecting and monitoring information in a monitoring control system such as a distributed control system (DCS), or in the cloud, using a server, and so forth.

In addition, the information on arbitrary points of the gas pipeline 1 is not limited to the hydrogen concentration and the amount, and information on the state of the gas pipeline 1 such as the concentration, the amount, the temperature, and the pressure of the natural gas may be collected and added to the monitoring target.

FIG. 5 is a block diagram of a hydrogen supply and demand management device 301 equipped with a function for predicting the future.

The hydrogen supply and demand management device 301 includes, as main functions, a system controller 320, a hydrogen usage amount aggregation unit 321, a real-time hydrogen amount analysis unit 322, a hydrogen usage amount prediction unit 323, a hydrogen supply amount determination unit 324, and a hydrogen supply amount aggregation unit 325. The hydrogen supply and demand management device 301 further includes a past hydrogen supply and demand database 326 and an environmental database 327. Similarly to hydrogen use management device 302 shown in FIG. 3, the system controller 320 executes information aggregation, control, and management operations for the entire hydrogen management system.

The past hydrogen supply and demand database 326 is a database that stores a past history of hydrogen usage and a past history of hydrogen supply.

The hydrogen usage amount aggregation unit 321 aggregates the hydrogen usage amounts received from the hydrogen use management device 302 using the hydrogen in the gas pipeline 1. The hydrogen supply amount aggregation unit 325 aggregates the hydrogen supply amounts received from the hydrogen supply management device 303 supplying hydrogen in the gas pipeline 1. The real-time hydrogen amount analysis unit 322 simulates the hydrogen usage amount in the gas pipeline 1 from the hydrogen usage amounts aggregated by the hydrogen usage amount aggregation unit 321 and the hydrogen supply amounts aggregated by the hydrogen supply amount aggregation unit 325. The hydrogen usage amount prediction unit 323 predicts a future hydrogen usage amount in the gas pipeline 1.

The hydrogen supply amount determination unit 324 compares the hydrogen amount simulated by the real-time hydrogen amount analysis unit 322 with the hydrogen usage amount predicted by the hydrogen usage amount prediction unit 323, and determines the hydrogen supply amount to be supplied to the gas pipeline 1.

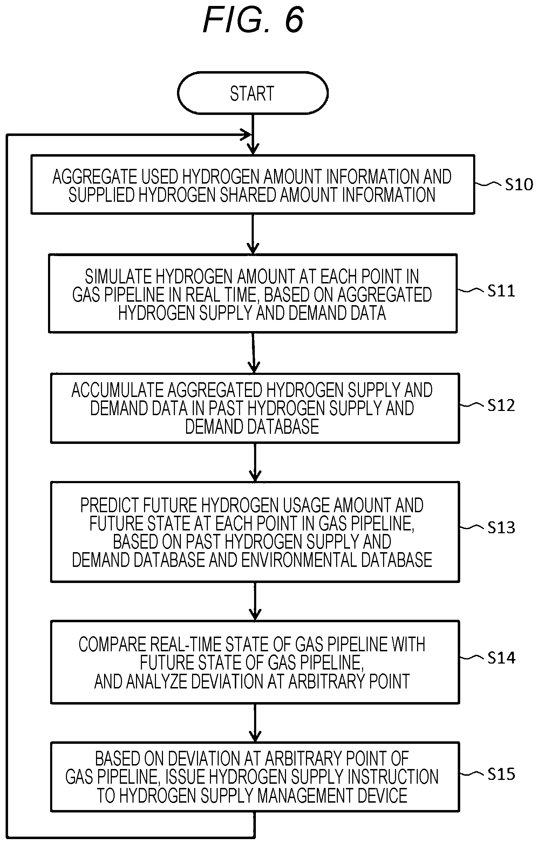

FIG. 6 is a flowchart of processing executed by the hydrogen supply and demand management device 301.

The system controller 310 causes the hydrogen use management device 302 to perform extraction from the gas pipeline 1, and aggregates information on the used real-time hydrogen amount (S10). The system controller 310 transmits the collected real-time hydrogen amount information from the extracted hydrogen amount communication unit 314 to the hydrogen usage amount aggregation unit 321 of the hydrogen supply and demand management device 301.

In addition, the system controller 310 aggregates real-time hydrogen supply amount information supplied by the hydrogen supply device 102 (S10). The system controller 310 transmits the real-time hydrogen supply amount information from the supplied hydrogen amount communication unit 332 to the hydrogen supply amount aggregation unit 325 of the hydrogen supply and demand management device 301.

The real-time hydrogen amount analysis unit 322 simulates the hydrogen concentration or the hydrogen amount in the gas pipeline 1 in real time based on the aggregated hydrogen supply and demand data (S11) . As a result, the real-time hydrogen amount analysis unit 322 is capable of quantifying or visualizing information at arbitrary points of the gas pipeline 1.

Next, the hydrogen usage amount prediction unit 323 predicts the hydrogen usage amount at each hydrogen usage point based on the data of the past hydrogen supply and demand database 326 in which the supply and demand data is accumulated via the hydrogen usage amount aggregation unit 321 and the hydrogen supply amount aggregation unit 325 and the data of the environmental database 327. Here, the environmental database 327 stores data related to the hydrogen usage amount such as, for example: user information such as the population at each hydrogen usage point and the number of hydrogen usage applications such as a fuel cell vehicle, a stationary fuel cell, and a hydrogen gas engine; event information affecting the hydrogen usage amount; and information such as weather, temperature, and humidity at each time.

The hydrogen usage amount prediction unit 323 derives a correlation between the past hydrogen usage amount at each hydrogen usage point that has accumulated in the past hydrogen supply and demand database 326 and the environmental data accumulated in the environmental database 327, and uses the correlation to predict the future hydrogen usage amount from, for example, the weather forecast, future event information, and so forth.

For example, as the population and the number of hydrogen usage applications increase, the hydrogen usage amount increases. Furthermore, the power generation amount increases and the hydrogen usage amount also increases according to the scale and number of events (festivals, music festivals, and the like) held in the corresponding region.

For example, because the temperature is low (for example, 5°C) in weather such as rain or snow in winter, the hydrogen usage amount for heating purposes increases. However, in cases where the weather is fine in summer, the temperature is high (for example, 30°C), and thus the hydrogen usage amount for cooling purposes increases. In addition, because the humidity is high during rainy season, the hydrogen usage amount for dehumidification purposes increases.

The hydrogen usage amount prediction unit 323 predicts a future hydrogen concentration or future hydrogen amount in the gas pipeline 1 from the information on the hydrogen usage amount at each point described above (S13). Future information at arbitrary points of the gas pipeline 1 as predicted by the hydrogen usage amount prediction unit 323 may be quantified or visualized.

Note that the future described above can be arbitrarily selected according to the time to be predicted. From the viewpoint of managing the state of the gas pipeline 1, the time is preferably several hours to several days later.

With the development of a hydrogen-based society, hydrogen demand is changing with the times. In view of this fact, as the data of the past hydrogen supply and demand database 326 and the environmental database 327 are accumulated, the correlation between the environmental data and the hydrogen usage amounts at each hydrogen usage point is preferably updated as needed.

Furthermore, as possible methods for deriving the correlation between the environmental data and the hydrogen usage amounts by using the past hydrogen supply and demand database 326 and the environmental database 327, there are methods that utilize artificial intelligence (AI), as typified by machine learning, in addition to methods utilizing a general statistical model.

The hydrogen supply amount determination unit 324 compares the real-time hydrogen amount of the gas pipeline 1, as simulated by the hydrogen usage amount aggregation unit 321, with the future hydrogen amount of the gas pipeline 1 as simulated by the hydrogen usage amount prediction unit 323, and analyzes the hydrogen amount deviation at arbitrary points of the gas pipeline 1 (S14).

The hydrogen supply amount determination unit 324 further calculates and determines at which point on the gas pipeline 1 it is necessary to inject a certain amount of hydrogen, based on the hydrogen amount deviation at each point, and transmits a command to a hydrogen supply command receiver 331 of the hydrogen supply management device 303 (S15). The hydrogen supply amount to be supplied to the gas pipeline 1 is determined according to this command. Thereafter, the hydrogen supply and demand management device 301 returns to the processing of step S10 and repeats a series of processes.

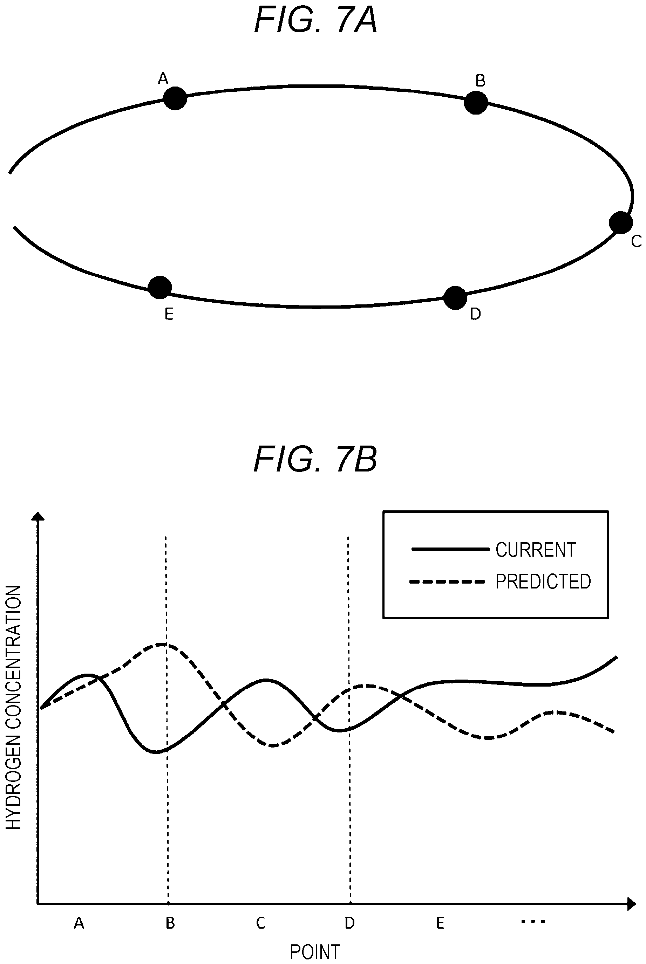

FIG. 7A is a schematic diagram showing points on the gas pipeline 1.

It is shown that there are arbitrary points A to E in the gas pipeline 1.

FIG. 7B is a graph showing hydrogen concentrations at different points. This graph shows the hydrogen concentration at each point in real time described above and the predicted hydrogen concentration at each point.

The vertical axis of the graph of FIG. 7B indicates the hydrogen concentration. The horizontal axis of the graph indicates each point of the gas pipeline 1.

For example, if the relationship between the current state (solid line) and the predicted state (dotted line) of the gas pipeline 1 is the relationship shown in the graph, the predicted hydrogen concentration is higher than the current hydrogen concentration at the points B and D, that is, it is necessary to add hydrogen. Therefore, by visualizing such a relationship, it is possible to grasp at which point in the gas pipeline and how much hydrogen must be press-fitted by when, and to realize appropriate management and operation of the gas pipeline.

In the method disclosed in the present embodiment, the hydrogen supply and demand management device 301 predicts a future state of the gas pipeline 1 by using the real-time hydrogen concentration therein, and the past supply and demand data and environmental data, thus enabling the hydrogen usage device 201 at each point to use hydrogen when desirable, without unfairness.

FIG. 8 is a block diagram of the hydrogen use management device 302.

FIG. 8 illustrates an example in which, in the hydrogen use management device 302 shown in FIG. 3, the hydrogen use management device 302 is used in a case where city gas (13A) is utilized, and the hydrogen usage device 10000 is a hydrogen gas-utilizing solid polymer electrolyte fuel cell (PEFC) unit 1001 for domestic use.

A blend gas obtained by blending hydrogen with city gas (13A), which is produced by regulating natural gas as the main component, flows through the gas pipeline 1.

Note that, in the specification of the blend gas flowing through the gas pipeline 1, the blend composition is 20 vol% of hydrogen, 80 vol% of city gas, and the blend gas temperature and the temperature correspond to the conditions of the low pressure conduit (about 10 to 17°C, 0.1 MPa).

The hydrogen use management device 302 is connected to the gas pipeline 1, and is configured to extract the blend gas from the gas pipeline 1.

The hydrogen use management device 302 includes a system controller 310, a hydrogen extraction unit 311, an extracted hydrogen supply unit 312, an extracted hydrogen amount measurement unit 313, an extracted hydrogen amount communication unit 314, and a gas return unit 315. The hydrogen extraction unit 311 includes an extracted gas flow meter 3111, a temperature/pressure-boosting regulator 3112 that raises the temperature of the blend gas by increasing the pressure of the blend gas, and a hydrogen separation membrane unit 3113 that separates hydrogen from the blend gas.

The extracted hydrogen supply unit 312 includes a pressure/temperature/flow rate regulator 3121. The extracted hydrogen amount measurement unit 313 includes a hydrogen gas flow meter 3131. The system controller 310 includes a system control unit 3101. The extracted hydrogen amount communication unit 314 includes a communication unit 3141. The gas return unit 315 includes a decompression/cooling regulator 3151 that cools the blend gas by decompressing same, and a return gas flow meter 3152.

The system controller 310 executes information aggregation and control management for the entire hydrogen management system. Under the control of the system controller 310, the hydrogen is supplied to the hydrogen usage device 1000 owned by the hydrogen usage device 201 by using the following procedure.

The extracted gas flow meter 3111 measures the flow rate of the blend gas extracted from the gas pipeline 1. As the extracted gas flow meter 3111, a flow meter of the ultrasonic type, the Coriolis type, the hot wire type, or the like, can be used.

Then, the temperature/pressure-boosting regulator 3112 regulates the blend gas extracted from the gas pipeline 1 to a temperature and a pressure necessary for separating hydrogen by the hydrogen separation membrane unit 3113. For example, when using a hydrogen separation membrane unit 3113 having an introduction pressure of a blend gas of 0.3 MPa and a temperature of 80°C and having an ability to separate hydrogen with an accuracy of 99.99998%, the temperature/pressure-boosting regulator 3112 raises the pressure of the blend gas from 0.1 MPa to 0.3 MPa and raises the blend gas temperature from 10 to 17 °C to 80°C.

Examples of hydrogen separation membranes that can be used by the hydrogen separation membrane unit 3113 include a metal film containing Pd, Nb, V, Ti, Ni, Cu, Ag, or the like, a polymer film such as a polyimide, a ceramic film using silica, silicon nitride, SiC, or alumina, and a carbon film such as graphene, or a combination of these films.

Note that the system control unit 3101 monitors and controls the temperature/pressure-boosting regulator 3112 to establish a predetermined pressure and temperature. Because the temperature, pressure, and the like suitable for use are different in each membrane, the setting value for controlling the temperature/pressure-boosting regulator 3112 in the system control unit 3101 is changed according to the membrane to be used.

The hydrogen separation membrane unit 3113 extracts 99.9998% of the hydrogen gas from the blend gas regulated to 0.3 MPa and 80 °C by the temperature/pressure-boosting regulator 3112, and sends the hydrogen gas to the pressure/temperature/flow rate regulator 3121. The hydrogen separation membrane unit 3113 then returns the remaining return gas to gas return unit 315.

The pressure/temperature/flow rate regulator 3121 performs regulation to obtain hydrogen that satisfies the condition of being suitable for the PEFC unit 1001. The pressure/temperature/flow rate regulator 3121 regulates the pressure of hydrogen gas to 0.1 MPa, the temperature to 10 to 17 °C, and the gas flow rate to 7 Nm³/h, for example.

A compressor, a temperature controller, or the like, may be utilized as a device required in the regulation.

The hydrogen gas flow meter 3131 measures the amount of hydrogen (for example, 7 Nm³/h) supplied to the PEFC unit 1001 and the time (for example, in hours), and transmits information to the system control unit 3101. As the hydrogen gas flow meter 3131, a flow meter of the ultrasonic type, the Coriolis type, the hot wire type, or the like, can be used.

The return gas having, as a main component, the city gas after hydrogen is separated from the blend gas (0.3 MPa, 80°C) has a pressure of less than 0.3 MPa and a temperature of about 80°C. In this case, the decompression/cooling regulator 3151 regulates the pressure to 0.1 MPa and the temperature to 10 to 17 °C, which are the conditions for returning the gas to the gas pipeline 1. The regulated return gas is returned to the gas pipeline 1 through the return gas flow meter 3152. As the return gas flow meter 3152, a flow meter of the ultrasonic type, the Coriolis type, the hot wire type, or the like, can be used.

The system control unit 3101 accumulates the hydrogen usage amount from the hydrogen gas flow meter 3131 and the amount of gas returned from the return gas flow meter 3152 to the gas pipeline 1 (the return gas amount) . The system control unit 3101 transmits the hydrogen usage amount and the return gas amount to the hydrogen supply and demand management device 301 through the communication unit 3141.

The hydrogen supply and demand management device 301 performs a real-time simulation of the hydrogen concentration at each point of the gas pipeline 1 based on the information on the hydrogen usage amount and the return gas amount received from the hydrogen use management device 302 at each point.

### (Advantageous Effects of Present Embodiment)

The present embodiment described hereinabove affords the following advantageous effects (A) to (D).
(A) The method and the device of the present invention enable a hydrogen supply that satisfies economic efficiency, safety, convenience, and global warming countermeasures with respect to hydrogen that is produced as clean energy.
(B) The hydrogen supply device is capable of supplying hydrogen to the hydrogen usage device at low cost and safely.
(C) The hydrogen usage device is capable of using the required amount of hydrogen when necessary without contacting the hydrogen supply device in advance.
(D) Carbon dioxide emission by the hydrogen usage device can be prevented.

### (Modifications)

The present invention is not limited to or by the above-described embodiment, and includes various modifications. For example, the above-described embodiments have been described in detail in order to describe the present invention in an easy-to-understand manner, and are not necessarily limited to embodiments having all the described configurations. Part of the configuration of a certain embodiment can be replaced with the configuration of another embodiment, and the configuration of another embodiment can also be added to the configuration of the certain embodiment. In addition, it is also possible to add or delete other configurations to/from some of the configurations of each embodiment, or to replace some of these configurations.

Some or all of the above-described configurations, functions, processing units, processing means, and the like, may be realized by hardware such as an integrated circuit, for example. Each of the above-described configurations, functions, and the like may be realized by software as a result of a processor interpreting and executing a program for realizing the respective functions. Information such as a program, a table, or a file for realizing each function can be stored on a recording device such as a memory, a hard disk, and a solid state drive (SSD), or a recording medium such as a flash memory card and a digital versatile disk (DVD) .

In each embodiment, the control lines and the information lines indicate what is considered to be necessary for the description, and do not necessarily indicate all the control lines and the information lines in the product. In practice, almost all the configurations may be considered to be connected to each other.

### Reference Signs List

- 1: gas pipeline
- 2: other regional gas pipeline
- 3: gas pipeline branch point
- 4: gas pipeline junction
- 300: hydrogen supply and demand management operations system
- 301: hydrogen supply and demand management device
- 302: hydrogen use management device
- 303: hydrogen supply management device
- 101: gas supply origin
- 102: hydrogen supply device
- 201: hydrogen usage device
- 202: hydrogen centralized supply facility
- 203: fuel cell vehicle
- 204: hydrogen transporting means
- 901: blend gas
- 902: hydrogen
- 903: return gas
- 310: system controller
- 311: hydrogen extraction unit
- 312: extracted hydrogen supply unit
- 313: extracted hydrogen amount measurement unit
- 314: extracted hydrogen amount communication unit
- 315: gas return unit
- 310: system controller
- 320: system controller
- 330: system controller
- 321: hydrogen usage amount aggregation unit
- 322: real-time hydrogen amount analysis unit
- 323: hydrogen usage amount prediction unit
- 324: hydrogen supply amount determination unit
- 325: hydrogen supply amount aggregation unit
- 326: past hydrogen supply and demand database
- 327: environmental database
- 331: hydrogen supply command receiver
- 332: supplied hydrogen amount communication unit
- 1000: hydrogen usage device
- 3101: system control unit
- 3111: extracted gas flow meter
- 3112: temperature/pressure-boosting regulator
- 3113: hydrogen separation membrane unit
- 3121: pressure/temperature/flow rate regulator
- 3131: hydrogen gas flow meter
- 3141: communication unit
- 3151: decompression/cooling regulator
- 3152: return gas flow meter
- 1001: PEFC unit

## Claims

1. A hydrogen use management device, comprising:
a hydrogen extraction unit that extracts hydrogen from a blend gas supplied from a gas pipeline;
an extracted hydrogen supply unit that supplies the hydrogen extracted by the hydrogen extraction unit to a hydrogen usage device;
an extracted hydrogen amount measurement unit that measures a hydrogen usage amount extracted by the hydrogen extraction unit and supplied to the hydrogen usage device;
an extracted hydrogen amount communication unit that transmits, to an outside, information on the hydrogen usage amount measured by the extracted hydrogen amount measurement unit; and
a gas return unit that returns the gas, after the hydrogen extraction unit has separated the hydrogen, to the gas pipeline.

2. The hydrogen use management device according to claim 1,
wherein the hydrogen extraction unit comprises:
a temperature/pressure-boosting regulator that raises a temperature of the blend gas by increasing a pressure thereof; and
a hydrogen separation membrane unit that separates hydrogen from the blend gas.

3. The hydrogen use management device according to claim 1,
wherein the gas return unit comprises:
a decompression/cooling regulator that cools the blend gas by decompressing a same.

4. The hydrogen use management device according to claim 1,
wherein the extracted hydrogen supply unit comprises a regulator that regulates any one or more of a pressure, a temperature, and flow rate of hydrogen gas.

5. A hydrogen supply and demand management device, comprising:
a hydrogen usage amount aggregation unit that aggregates hydrogen usage amounts received from a hydrogen use management device that uses hydrogen in a gas pipeline;
a hydrogen supply amount aggregation unit that aggregates hydrogen supply amounts received from a hydrogen supply management device that supplies hydrogen into the gas pipeline; and
a real-time hydrogen amount analysis unit that simulates the amount of hydrogen in the gas pipeline from the hydrogen usage amounts aggregated by the hydrogen usage amount aggregation unit, and the hydrogen supply amounts aggregated by the hydrogen supply amount aggregation unit.

6. The hydrogen supply and demand management device according to claim 5, further comprising:
a hydrogen usage amount prediction unit that predicts a future hydrogen usage amount in the gas pipeline based on a database of past hydrogen usage amounts and past hydrogen supply amounts, and an environmental database; and
a hydrogen supply amount determination unit that compares the hydrogen amount simulated by the real-time hydrogen amount analysis unit with the hydrogen amount of the gas pipeline predicted by the hydrogen usage amount prediction unit to determine a hydrogen supply amount to be supplied to the gas pipeline.

7. A hydrogen supply and demand management operations system, comprising:
a hydrogen supply and demand management device that manages information on an amount of hydrogen extracted and used in a gas pipeline and an amount of hydrogen supplied to the gas pipeline;
a hydrogen use management device that extracts hydrogen from a blend gas in the gas pipeline, causes an external device to use the extracted hydrogen, and transmits information on a hydrogen usage amount used by the external device to the hydrogen supply and demand management device; and
a hydrogen supply management device that supplies hydrogen to the gas pipeline and transmits information on the amount of hydrogen supplied to the gas pipeline to the hydrogen supply and demand management device.

8. The hydrogen supply and demand management operations system according to claim 7,
wherein the gas pipeline is a gas pipeline in which a blend gas of natural gas and hydrogen flows.

9. A hydrogen supply and demand management method, comprising:
a step in which a hydrogen usage amount aggregation unit aggregates hydrogen usage amounts received from a hydrogen use management device that uses hydrogen in a gas pipeline;
a step in which a hydrogen supply amount aggregation unit aggregates hydrogen supply amounts received from a hydrogen supply management device that supplies hydrogen into the gas pipeline; and
a step in which a hydrogen amount prediction unit simulates the hydrogen amount in the gas pipeline from the hydrogen usage amounts aggregated by the hydrogen usage amount aggregation unit and the hydrogen supply amounts aggregated by the hydrogen supply amount aggregation unit.

10. The hydrogen supply and demand management method according to claim 9, further comprising:
a step in which a hydrogen usage amount prediction unit predicts the hydrogen usage amount in the gas pipeline from a database of past hydrogen usage amounts and past hydrogen supply amounts; and
a step in which the hydrogen amount simulated by the hydrogen amount prediction unit is compared with the hydrogen usage amount predicted by the hydrogen usage amount prediction unit to determine the hydrogen supply amount to be supplied to the gas pipeline.
